# FASCICULE DE BREVET EUROPEEN

(11) **EP 2 495 531 B1**
(45) Date de publication et mention de la délivrance du brevet: **14.05.2014**
(21) Numéro de dépôt: 12157918.9
(22) Date de dépôt: 02.03.2012
(51) Int. Cl.: G01C 21/24, B64G 1/36, G05D 1/08

(54) **Procédé de mesure de la stabilité d'une ligne de visée et senseur stellaire correspondant**
Verfahren zum Messen der Stabilität einer Sichtlinie und entsprechender Sternsensor
Method for measuring the stability of a line of sight and corresponding star sensor

(30) Priorité: 03.03.2011 FR 1151734
(43) Date de publication de la demande: 05.09.2012
(73) Titulaire: Centre National d'Etudes Spatiales, 75001 Paris (FR)
(72) Inventeur: Mignot, Jean, 31520 RAMONVILLE (FR); Martinez, Pierre-Emmanuel, 31240 SAINT-JEAN (FR)
(74) Mandataire: Regimbeau

(56) Documents cités:
- US-A- 5 223 702
- US-A- 5 745 869
- US-A- 6 102 338
- US-A- 6 108 594

## Description

### DOMAINE TECHNIQUE GENERAL

L'invention concerne un procédé de mesure de la stabilité d'une ligne de visée d'un dispositif, par exemple un dispositif d'imagerie, dans un satellite.

L'invention concerne également des applications de ce procédé : mesure des vibrations mécaniques, traitement d'images prises par le dispositif, et contrôle de l'attitude du satellite.

Enfin, l'invention concerne un senseur stellaire, apte à mettre en oeuvre le procédé selon l'invention, et un satellite comprenant un tel senseur stellaire.

### ETAT DE L'ART

Dans le domaine spatial, il est connu de contrôler l'attitude des satellites, c'est-à-dire l'orientation des axes du satellite par rapport à un trièdre de référence.

Ces satellites embarquent un dispositif, également appelé charge utile, qui peut comprendre un dispositif optique de type dispositif d'imagerie, ou un dispositif de détection (radar, télédétection laser...).

Il s'agit par exemple de satellites d'observation embarquant un dispositif d'imagerie pour la prise d'images de la Terre. En fonction de la zone à observer, un pilotage de l'attitude du satellite est opéré, afin de contrôler la ligne de visée du dispositif d'imagerie.

Actuellement, les satellites embarquent des senseurs stellaires utilisés pour contrôler l'attitude du satellite, et donc la ligne de visée du dispositif d'imagerie embarqué sur ledit satellite.

Les senseurs stellaires comprennent une ou plusieurs têtes adaptées pour la prise d'images d'étoiles à basse fréquence, généralement inférieure à 10 Hz. Les images ainsi prises sont comparées avec un catalogue d'étoiles embarqué, pour déterminer l'attitude du satellite. Ces mesures sont alors traitées par le système de contrôle d'attitude et d'orbite du satellite (SCAO), pour contrôler l'attitude du satellite en temps réel.

Par ailleurs, les satellites sont soumis à des vibrations mécaniques dont l'amplification à haute fréquence affecte la ligne de visée du dispositif d'imagerie lors des prises d'images et induisent donc un bruit de mesure sur les images, qu'il faut mesurer, voire contrôler. Les facteurs d'amplification dépendent directement de la réponse harmonique de la structure du satellite.

La mesure des mouvements affectant la ligne de visée se fait le plus souvent par l'utilisation de gyroscopes, comme décrit par exemple dans le document US 6,108,594.

Les gyroscopes permettent de déterminer la vitesse angulaire du dispositif d'imagerie, à une fréquence située typiquement autour de 30 Hz.

Cette vitesse angulaire donne une indication sur la stabilité de la ligne de visée, résultant de l'influence des microvibrations.

Les images prises par le dispositif d'imagerie sont alors transmises puis traitées par une station de traitement au sol, qui recale les images bruitées en prenant en compte la restitution d'attitude du satellite basée sur l'utilisation des mesures gyroscopiques. Ainsi, la perturbation dynamique liée aux microvibrations peut être réduite sur les images.

Les solutions actuelles présentent de nombreux inconvénients. D'une part, les gyroscopes sont très coûteux.

De plus, ils sont difficiles à mettre en oeuvre, puisqu'ils nécessitent un recalage périodique en raison de leur dérive.

Enfin, la mesure et le contrôle de la direction et de la stabilité de la ligne de visée nécessitent plusieurs capteurs différents (gyroscope, senseur stellaire), ce qui accroît la complexité et la masse de l'ensemble. La consommation du satellite est également accrue.

### PRESENTATION DE L'INVENTION

L'invention propose de pallier ces inconvénients.

A cet effet, l'invention propose un procédé de mesure de la stabilité d'une ligne de visée d'un dispositif dans un satellite comprenant au moins un senseur stellaire, le senseur stellaire comprenant au moins une première tête adaptée pour la prise d'image d'étoiles à une première fréquence, pour la mesure d'une direction de la ligne de visée par comparaison avec un catalogue d'étoiles, et une deuxième tête adaptée pour la prise d'image d'étoiles à une deuxième fréquence supérieure à la première fréquence, ledit procédé comprenant les étapes consistant à :
- prendre successivement une pluralité d'images d'étoiles à partir de la deuxième tête à ladite deuxième fréquence, et
- déduire une information relative au déplacement angulaire de la ligne de visée à partir du déplacement relatif d'au moins une étoile dans ladite pluralité d'images.

L'invention est avantageusement complétée par les caractéristiques suivantes, prises seules ou en une quelconque de leur combinaison techniquement possible :
- la deuxième fréquence est supérieure à 30Hz ;
- ladite information est un déplacement angulaire et/ou une vitesse angulaire de la ligne de visée ;
- l'étape consistant à déduire une information relative au déplacement angulaire de la ligne de visée comprend une étape préalable de sélection d'au moins une étoile d'intérêt à partir d'au moins une prise d'image de la première tête, et une étape de déduction de ladite information à partir du déplacement relatif de ladite étoile d'intérêt.

L'invention concerne également un procédé de mesure de vibrations mécaniques d'un dispositif dans un satellite, comprenant l'étape consistant à déduire de l'information relative au déplacement angulaire de la ligne de visée du dispositif et obtenue par le procédé de mesure précédemment décrit, des vibrations subies par le dispositif à une fréquence inférieure à la deuxième fréquence.

L'invention concerne également un procédé de traitement d'images, utilisant le procédé de mesure précédemment décrit dans lequel le dispositif est un dispositif d'imagerie, comprenant les étapes consistant à :
- fournir des images prises par le dispositif d'imagerie, lesdites images comprenant un bruit lié au déplacement angulaire de la ligne de visée dudit dispositif d'imagerie,
- traiter lesdites images à partir de l'information relative au déplacement angulaire de la ligne de visée, pour réduire ledit bruit.

L'invention concerne également un procédé de contrôle d'attitude d'un satellite, comprenant l'étape consistant à contrôler ladite attitude du satellite à partir de l'information relative au déplacement angulaire de la ligne de visée du dispositif, déduite du procédé de mesure précédemment décrit.

L'invention concerne également un senseur stellaire, apte être monté sur un satellite, comprenant au moins une première tête adaptée pour la prise d'image d'étoiles à une première fréquence, une deuxième tête adaptée pour la prise d'image d'étoiles à une deuxième fréquence supérieure à la première fréquence, et une unité de traitement apte à déduire des images prises par la première tête une direction d'une ligne de visée d'un dispositif dudit satellite, par comparaison avec un catalogue d'étoiles, et déduire des images prises par la deuxième tête une information relative au déplacement angulaire de la ligne de visée, à partir du déplacement relatif d'au moins une étoile dans lesdites images.

Avantageusement, la deuxième fréquence est supérieure à 30Hz.

L'invention concerne également un satellite comprenant un senseur stellaire tel que décrit précédemment, et un dispositif, l'unité de traitement du senseur stellaire étant apte à déduire des images prises par la première tête une direction d'une ligne de visée dudit dispositif, et déduire des images prises par la deuxième tête une information relative au déplacement angulaire de la ligne de visée, à partir du déplacement relatif d'au moins une étoile dans lesdites images.

Avantageusement, la deuxième tête du senseur stellaire est positionnée à une distance du dispositif, calculée pour qu'aucun mode de vibration mécanique subi par le dispositif n'apparaisse dans ladite deuxième tête à une fréquence inférieure à la deuxième fréquence.

Avantageusement, le senseur stellaire présente une pluralité de deuxièmes têtes adaptées pour la prise d'image d'étoiles à une fréquence supérieure à la première fréquence, et orientées selon des directions de prise d'image différentes.

Avantageusement, le dispositif est un dispositif d'imagerie, ou un dispositif de détection, de type radar ou télédétection laser.

L'invention présente de nombreux avantages.

Un avantage de l'invention est qu'elle présente une solution moins coûteuse.

Un autre avantage de l'invention est de réduire la masse et la consommation du satellite.

Un autre avantage encore de l'invention est de simplifier l'architecture de traitement embarquée à bord du satellite.

Un autre avantage encore de l'invention est qu'elle permet une réduction du nombre de capteurs différents embarqués sur le satellite.

Un autre avantage encore de l'invention est qu'elle permet une mesure et un contrôle en vol des microvibrations.

Enfin, un autre avantage de l'invention est qu'elle permet des mesures à plus haute fréquence, pour augmenter la bande passante de contrôle d'attitude du satellite.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la Figure 1 est une représentation schématique d'un mode de réalisation d'un satellite selon l'invention ;
- la Figure 2 est une représentation schématique d'un mode de réalisation d'un senseur stellaire selon l'invention ;
- la Figure 3 est une représentation schématique de modes de réalisation du procédé selon l'invention ;
- la Figure 4 est une représentation schématique d'images d'étoiles prises par une des têtes du senseur stellaire selon l'invention.

### DESCRIPTION DETAILLEE

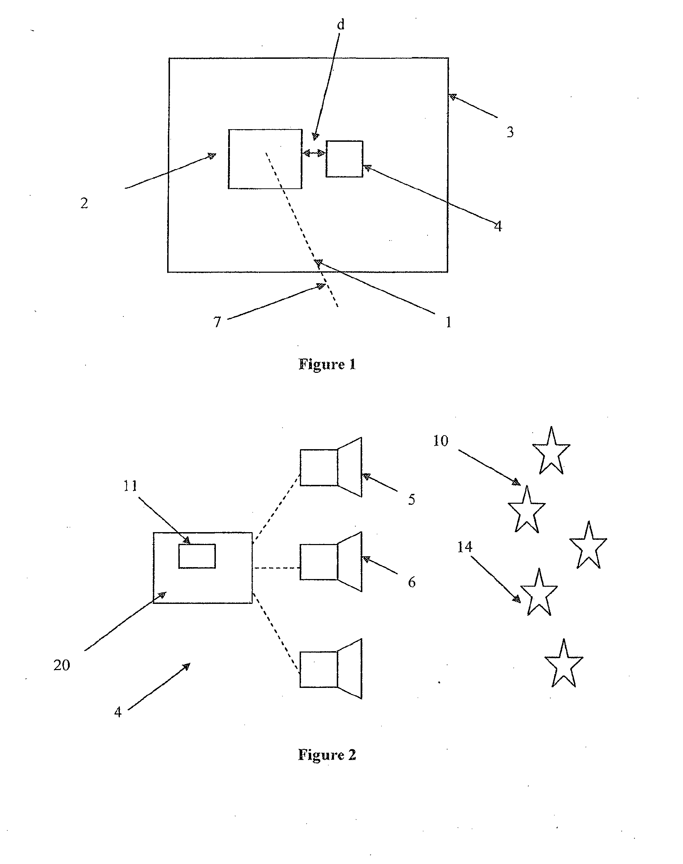

On a représenté en Figure 1 un satellite 3 selon l'invention, comprenant un senseur 4 stellaire et un dispositif 2.

Le satellite est, par exemple, mais non limitativement, un satellite géostationnaire, ou un satellite à orbite basse (satellite LEO, « *Low Earth Orbit* »).

Le dispositif 2 est placé sur la plateforme du satellite 3, et est avantageusement un dispositif optique, notamment un dispositif d'imagerie, ou un dispositif de détection (radar, ou télédétection laser, par exemple de type LIDAR, selon l'acronyme anglo-saxon « *Light Detection and Ranging* »). D'autres dispositifs optiques sont bien sûr envisageables selon les applications.

Le dispositif 2 présente une ligne 1 de visée, correspondant à la direction 7 dans l'espace vers laquelle le dispositif 2 pointe. Cette direction s'exprime dans un repère qui dépend des conventions choisies (repère satellite, ou inertiel ou autre), et constitue une ligne de référence du dispositif 2, pour caractériser sa direction de pointage.

La ligne 1 de visée est directement liée à l'attitude du satellite 3, après changement de repère. L'attitude est l'orientation des axes du satellite 3 par rapport à un repère de référence.

Le satellite 3 comprend un senseur 4 stellaire, également schématisé en Figure 2.

Le senseur 4 stellaire comprend au moins une première tête 5 adaptée pour la prise d'image d'étoiles 10 à une première fréquence f_{attitude}.

Le senseur 4 stellaire comprend en outre au moins une deuxième tête 6 adaptée pour la prise d'image d'étoiles 14 à une deuxième fréquence f_{stabilité} supérieure à la première fréquence f_{attitude}

Les têtes du senseur 4 stellaire comprennent par exemple des détecteurs de type APS (selon l'acronyme anglo-saxon « *Active-Pixel Sensor* »). Ces détecteurs mesurent l'intensité lumineuse émise par des étoiles 10, 14 de la voûte céleste, et les représentent sur une matrice de pixels.

La deuxième tête 6 est réglée pour effectuer des prises d'image d'étoiles 14 à une deuxième fréquence f_{stabilité} supérieure à la première fréquence f_{attitude} de la première tête.

A cet effet, la deuxième tête 6 présente une optique adaptée pour des mesures à plus haute fréquence que la première tête 5.

Comme le comprendra l'homme du métier, divers dimensionnements de l'optique de la deuxième tête 6 sont envisageables, en fonction des contraintes, des performances, et de la fréquence de mesure exigées.

De manière générale, par rapport à la première tête 5, le champ de vue de la deuxième tête 6 est réduit, tandis que le diamètre de l'objectif est augmenté. On cherchera pour cela un champ de vue de quelques degrés et des magnitudes mesurées permettant de conserver plusieurs étoiles dans le champ de vue.

En effet, comme explicité par la suite, la deuxième tête 6 est utilisée pour mesurer la stabilité de la ligne 1 de visée, tandis que la première tête 5 est utilisée pour mesurer la direction de la ligne 1 de visée, ce qui implique des contraintes différentes.

A titre illustratif, on pourra utiliser une première tête présentant un champ de vue d'une vingtaine de degrés, et une deuxième tête présentant un champ de vue d'une dizaine de degrés. La focale et le rayon de la pupille de la deuxième tête seront également adaptés pour des mesures à haute fréquence, par exemple, mais non limitativement, une focale de 75mm et un rayon de pupille de 80mm.

Avantageusement, la deuxième tête 6 du senseur stellaire est positionnée à une distance d du dispositif 2, calculée pour qu'aucun mode de vibration mécanique subi par le dispositif 2 n'apparaisse dans ladite deuxième tête 6 à une fréquence inférieure à la deuxième fréquence f_{stabilité.} La distance d est par exemple de quelques centimètres, cette valeur étant uniquement fournie à titre d'exemple, et étant dépendante de la rigidité de la structure.

Ce positionnement présente de nombreux avantages, comme explicité par la suite, notamment dans le cas de mesure de microvibrations subies par le dispositif 2.

Alternativement, le senseur stellaire lui-même est positionné à la distance d, et non plus uniquement la deuxième tête 6.

On notera que ce positionnement d'une tête du senseur 4 stellaire à proximité du dispositif 2 va à l'encontre des préjugés habituels de l'homme du métier, pour qui le senseur stellaire, destiné auparavant uniquement à mesurer une attitude, peut être positionné à tout endroit du satellite 3, celle-ci étant identique en tout point du satellite, contrairement aux microvibrations.

La tête du senseur 4 stellaire sera donc fixée à proximité du dispositif 2 afin d'assurer un lien rigide entre les deux systèmes.

Le senseur 4 stellaire comprend en outre une unité 20 de traitement, qui est un calculateur permettant de mettre en oeuvre des étapes de traitement des mesures effectuées par la première et la deuxième têtes 5, 6, comme explicité par la suite.

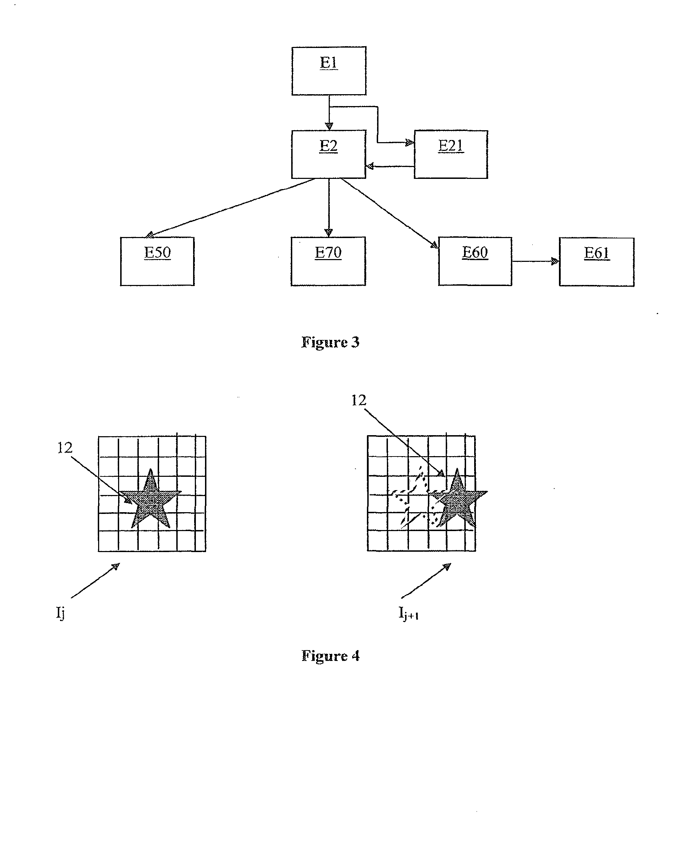

On décrira à présent un procédé de mesure de la stabilité de la ligne 1 de visée du dispositif 2, illustré en Figure 3.

La première tête 5 est adaptée pour la prise d'image d'étoiles 10 à une première fréquence f_{attitude}.

Cette mesure permet de déduire la direction 7 de la ligne 1 de visée par comparaison avec un catalogue 11 d'étoiles. Cette déduction est opérée par l'unité 20 de traitement.

La comparaison des images prises par la première tête 5, avec des étoiles connues et stockées dans le catalogue 11 d'étoiles embarqué à bord du satellite 3, en général dans une mémoire de l'unité 20 de traitement, permet de déduire l'attitude du satellite 3 et/ou la direction de la ligne 1 de visée. Comme on le comprend, les étoiles constituent un point de repère fixe, dont on connaît la position, ce qui permet de déduire la direction 7 de la ligne 1 de visée.

Le plus souvent, une multitude d'étoiles est utilisée pour déduire la direction de la ligne de visée, ce qui explique que la première tête présente un champ de vue plus grand que la deuxième tête.

En général, la première tête 5 est réglée pour mesurer l'intensité lumineuse d'étoiles dont la magnitude est supérieure à un seuil prédéterminé.

Le compromis entre la taille du champ de vue et la résolution du pixel permet de garantir la robustesse du senseur aux « trous d'étoiles ».

La première fréquence fₐₜₜᵢₜᵤₐₑ est typiquement comprise entre 0 et 10Hz, c'est-à-dire située à basse fréquence.

La mesure de la direction de la ligne de visée est en général utilisée par le système de contrôle d'attitude et d'orbite (SCAO) du satellite, afin de piloter l'attitude du satellite et donc la direction de la ligne de visée, en fonction des zones à viser par le dispositif 2 du satellite 3.

Le procédé illustré en Figure 3 comprend une étape E1 consistant à prendre successivement une pluralité d'images lⱼ d'étoiles à partir de la deuxième 6 tête à ladite deuxième fréquence f_{stabilité}.

Une étape ultérieure E2 consiste à déduire une information Δθ, v_{θ} relative au déplacement angulaire de la ligne 1 de visée à partir du déplacement relatif d'au moins une étoile 12 dans ladite pluralité d'images lⱼ. L'information est par exemple un déplacement angulaire Δθ et/ou une vitesse angulaire v_{θ} de la ligne 1 de visée.

Cette étape E2 est également réalisée par l'unité 20 de traitement. Elle est également réalisée à la deuxième fréquence f_{stabilité}.

Avantageusement, la deuxième fréquence f_{stabilité} est supérieure ou égale à l'une de ces valeurs : 30Hz, 50 Hz, 70 Hz, 100 Hz. Plus la deuxième fréquence f_{stabilité} est élevée, plus la mesure du déplacement angulaire de la ligne 1 de visée sera utile pour la détermination des mouvements haute fréquence affectant la précision de mesure, par exemple d'un imageur. En particulier, les diverses applications évoquées par la suite (mesure des microvibrations, traitement d'images bruitées etc.) seront d'autant plus performantes que la deuxième fréquence f_{stabilité} sera élevée. On peut ainsi envisager de monter en fréquence à 100 Hz. Toutefois, avec la montée en puissance des unités de calcul et des têtes d'imagerie, on peut idéalement envisager des fréquences autour de 500 Hz.

Ainsi, la deuxième fréquence est une haute fréquence, tandis que la première fréquence est une basse fréquence.

Contrairement à la première tête, il suffit de disposer d'images de quelques étoiles prises par la deuxième tête pour mesurer la stabilité de la ligne de visée.

Le principe de déduction de l'information Δθ, v_{θ} relative au déplacement angulaire de la ligne 1 de visée à partir du déplacement relatif d'au moins une étoile 12 dans la pluralité d'images lⱼ est illustré en Figure 4. En général, l'information est un déplacement angulaire Δθ et/ou une vitesse angulaire v_{θ} de la ligne 1 de visée.

Une première image lⱼ de l'étoile 12 est réalisée par la deuxième tête 6. A un instant ultérieur, fonction de la deuxième fréquence f_{stabilité} et d'éventuels temps de pause de la deuxième tête 6, une autre image lⱼ₊₁ est prise par la deuxième tête 6. Comme on peut le constater, l'étoile 12 a subi un déplacement relatif d'une image à l'autre.

Par suite, on déduit le déplacement angulaire Δθ de l'étoile 12, qui correspond donc au déplacement angulaire Δθ de la ligne 1 de visée, ce déplacement étant notamment causé par des vibrations mécaniques subies par le dispositif 2.

En divisant le déplacement angulaire Δθ par le temps qui sépare la prise de deux images successives par la deuxième tête 6, on obtient la vitesse angulaire v_{θ} de la ligne 1 de visée. D'autres informations sont bien sûr calculables, comme l'accélération ou autre.

Le choix des étoiles à observer par la deuxième tête 6 peut s'opérer de diverses manières.

Dans un mode de réalisation avantageux, l'étape E2 comprend une étape préalable E21 de sélection d'au moins une étoile d'intérêt à partir d'une prise d'image de la première tête 5.

Il s'ensuit alors l'étape E2 de déduction de ladite information Δθ, vθ à partir du déplacement relatif de ladite étoile 13 d'intérêt.

Dans ce mode de réalisation, la première tête 5 est porteuse d'informations sur les étoiles vues par le senseur 4 stellaire, étant donné que l'unité 20 de traitement identifie les étoiles prises par la première tête 5 en comparant les images avec un catalogue 11 d'étoiles embarqué. Ainsi, la deuxième tête 6 reçoit une information sur les étoiles pertinentes à observer.

En pratique, ceci revient à choisir une zone d'intérêt de l'image prise par la deuxième tête 6, ladite zone comprenant une ou plusieurs étoiles d'intérêt identifiées par la première tête 5 en coopération avec l'unité 20 de traitement.

Ceci permet notamment d'accélérer et de faciliter l'étape E2, et donc les performances générales du procédé. On notera que les technologies APS (Active Pixel Sensor) facilitent cette étape de fenêtrage.

Alternativement, les étoiles d'intérêt sont sélectionnées à partir de connaissances de la position du satellite 3. Avantageusement, le système SCAO fournit l'information de sélection à la deuxième tête 6.

Le procédé de mesure de la stabilité de la ligne de visée connaît de nombreuses applications.

Il est ainsi possible de mesurer les vibrations mécaniques subies par le dispositif 2 à haute fréquence, également appelées microvibrations. Le résultat des mesures est alors utilisé à bord du satellite, via l'unité 20 de traitement, soit dans une station de traitement au sol.

Ce procédé comprend l'étape E50 consistant à déduire de l'information Δθ, v_{θ} relative au déplacement angulaire de ladite ligne 1 de visée dudit dispositif 2, obtenue via le procédé précédemment décrit, les vibrations subies par le dispositif 2 à une fréquence f_{µ} inférieure à la deuxième fréquence f_{stabilité}. En particulier, selon le théorème de Shannon, les vibrations inférieures ou égales à la moitié de la deuxième fréquence f_{stabilité} seront avantageusement déduites.

En effet, comme énoncé précédemment, le dispositif 2 subit des vibrations mécaniques à haute fréquence, du fait que la structure du satellite est souple. Or, l'information Δθ, v_{θ} relative au déplacement angulaire de la ligne 1 de visée dudit dispositif 2 est représentative des vibrations mécaniques subies par le dispositif 3.

Le choix de la deuxième fréquence f_{stabilité} permet de mesurer des vibrations dans la bande de fréquence désirée.

Avantageusement, la deuxième tête 6 du senseur stellaire est positionnée à la distance d du dispositif 2, calculée pour qu'aucun mode de vibration mécanique subi par le dispositif 2 n'apparaisse dans ladite deuxième tête 6 à une fréquence inférieure à la deuxième fréquence f_{stabilité}. Il s'agit en fait de positionner le senseur 4 stellaire ou uniquement la deuxième tête 6 à proximité du dispositif 2, de sorte à éviter les déformées mécaniques entre les deux instruments dans la bande fréquentielle de mesure.

Grâce à ce positionnement, la deuxième tête 6 subit les mêmes vibrations à haute fréquence que le dispositif 2, ce qui évite que la deuxième tête 6 ne subisse des vibrations venant perturber sa prise d'images et n'étant pas subies par le dispositif 2. Dans le cas contraire, ceci pourrait altérer les mesures de la stabilité de la ligne 1 de visée.

Alternativement ou en complément, l'invention offre un procédé de traitement d'images utilisant le procédé de mesure d'une information Δθ, v_{θ} relative au déplacement angulaire de la ligne 1 de visée précédemment décrit.

Dans ce cas, le dispositif 2 est un dispositif d'imagerie, apte à prendre des images, par exemple de la Terre.

Une première étape E60 consiste à fournir des images prises par le dispositif 2 d'imagerie, lesdites images comprenant un bruit lié au déplacement angulaire Δθ, v_{θ} de la ligne 1 de visée dudit dispositif d'imagerie, en raison notamment des microvibrations.

Ces images sont fournies à l'unité 20 de traitement du satellite, pour un traitement à bord, ou à une station de traitement au sol, pour un traitement différé.

Une étape ultérieure E61 consiste à traiter lesdites images à partir de l'information Δθ, v_{θ} relative au déplacement angulaire de la ligne 1 de visée, pour réduire ledit bruit.

Il s'agit le plus souvent de traitements de type translation, rotation ou autre manipulation de l'image, destinés à « contrer » l'effet indésirable du déplacement angulaire de la ligne 1 de visée pendant les prises de vue, et donc des microvibrations.

Dans un autre mode de réalisation, l'attitude du satellite 3 est contrôlée en temps réel à partir des mesures effectuées par le senseur 4 stellaire. Ce type de procédé est notamment utilisé dans le cas de satellites manceuvrants, à orbite basse (satellites LEO, « *Low Earth Orbit* »). De tels satellites ont notamment pour caractéristique de pouvoir changer la direction 7 de la ligne 1 de visée par changement de l'attitude du satellite de manière rapide.

Il est avantageux d'opérer une étape E70 consistant à contrôler l'attitude du satellite 3 à partir de l'information Δθ, v_{θ} relative au déplacement angulaire de la ligne 1 de visée du dispositif 2 déduite du procédé précédemment décrit.

Dans ce cas, l'information Δθ, v_{θ} sert donc également à contrôler l'attitude du satellite, à plus haute fréquence.

Dans les applications d'imagerie de haute résolution, il peut être avantageux de disposer d'un senseur présentant une pluralité de têtes de chaque type.

Ainsi, un tel senseur présente une pluralité de deuxièmes têtes 6. Celles-ci sont par exemple aptes à prendre des images de différentes zones de la voûte céleste.

Avantageusement, ces deuxièmes têtes sont orientées selon des directions de prise d'image différentes.

Ainsi, l'utilisation de plusieurs deuxièmes têtes 6 permet de s'assurer que l'on dispose à tout moment d'étoiles dans le champ de vue. En effet, on sait que les deuxièmes têtes ont un champ de vue réduit.

De plus, on gagne en précision autour de l'axe de visée. Par exemple, si l'on dispose deux têtes 6 à 90°, on gagne en précision autour de l'axe de visée.

Ces deuxièmes têtes sont adaptées pour la prise d'image d'étoiles à une fréquence supérieure à la première fréquence de la première tête 5.

Il peut en être de même pour la première tête 5, qui peut être dupliquée.

Avantageusement, on hybride les mesures des différentes têtes pour élargir la bande passante de mesure. Ainsi, l'unité 20 de traitement est apte à hybrider la mesure d'une pluralité de deuxièmes têtes 6, et/ou d'une pluralité de premières têtes 5.

L'invention trouve de très nombreuses applications, puisque le besoin de stabilité du pointage se retrouve dans de nombreuses applications : vol en formation, mesure par radar, LIDAR, télécommunications optiques, observation et imagerie haute résolution.

L'invention présente de nombreux avantages.

L'invention permet de disposer d'un unique équipement pour mesurer la direction de la ligne de visée et sa stabilité. Ceci permet de réduire les coûts, la complexité et la masse de l'ensemble, ainsi que la consommation du satellite, ce qui est primordial dans les applications spatiales.

De plus, la chaîne de traitement est simplifiée. Une unique unité de traitement est apte à traiter à la fois les mesures de la première tête et de la deuxième tête, ce qui évite la nécessité de développer de nouvelles architectures avioniques complexes et coûteuses.

Egalement, l'invention permet de s'affranchir totalement des gyroscopes. Or, la plupart des satellites actuels utilisent ces technologies, qui restent coûteuses et complexes à manipuler.

Ainsi, contrairement aux dispositifs d'art antérieur, un unique senseur stellaire permet à la fois de piloter la direction de la ligne de visée à basse fréquence et de contrôler la stabilité de ladite ligne de visée à plus haute fréquence.

On notera que l'invention va à l'encontre des préjugés de l'homme du métier concernant l'utilisation d'un senseur stellaire, jusqu'ici uniquement utilisé pour piloter l'attitude, à basse fréquence. De plus, celui-ci est généralement aménagé indépendamment des dispositifs d'imagerie de la charge utile du satellite.

Dans l'invention, l'attitude et les microvibrations sont mesurées par le même capteur, qui est un senseur stellaire. Or, selon les préjugés de l'homme du métier, le senseur stellaire est uniquement destiné à effectuer des mesures d'attitude du satellite.

L'invention est très avantageuse aussi bien en termes de performances qu'en termes de coûts, qui sont des paramètres primordiaux dans l'industrie spatiale.

## Revendications

1. Procédé de mesure de la stabilité d'une ligne (1) de visée d'un dispositif (2) dans un satellite (3) comprenant au moins un senseur (4) stellaire, ledit senseur (4) stellaire comprenant au moins une première tête (5) adaptée pour la prise d'image d'étoiles (10) à une première fréquence (f_{attitude}), pour la mesure d'une direction (7) de la ligne (1) de visée par comparaison avec un catalogue (11) d'étoiles, et
une deuxième tête (6) adaptée pour la prise d'image d'étoiles (14), **caracterisé en ce que** ladite deuxième tête est adaptée pour la prise d'image d'étoiles à une deuxième fréquence (f_{stabilité}) supérieure à la première fréquence (f_{attitude}), et **en ce que** ledit procédé comprend les étapes consistant à :
- prendre (E1) successivement une pluralité d'images (lⱼ) d'étoiles à partir de la deuxième (6) tête à ladite deuxième fréquence (f_{stabilité}), et
- déduire (E2) une information (Δθ, v_{θ}) relative au déplacement angulaire de la ligne (1) de visée à partir du déplacement relatif d'au moins une étoile (12) dans ladite pluralité d'images (lⱼ).

2. Procédé selon la revendication 1, dans lequel la deuxième fréquence (f_{stabilité}) est supérieure à 30Hz.

3. Procédé selon l'une des revendications 1 ou 2, dans lequel ladite information est un déplacement angulaire (Δθ et/ou une vitesse angulaire (v_{θ}) de la ligne (1) de visée.

4. Procédé selon l'une des revendications 1 à 3, dans lequel l'étape (E2) consistant à déduire une information (Δθ, v_{θ}) relative au déplacement angulaire de la ligne (1) de visée comprend
une étape (E21) préalable de sélection d'au moins une étoile d'intérêt à partir d'au moins une prise d'image de la première tête (5), et
une étape (E2) de déduction de ladite information (Δθ, v_{θ}) à partir du déplacement relatif de ladite étoile d'intérêt.

5. Procédé de mesure de vibrations mécaniques d'un dispositif (2) dans un satellite (3), **caractérisé en ce qu'**il comprend l'étape (E50) consistant à déduire de l'information (Δθ, v_{θ}) relative au déplacement angulaire de ladite ligne (1) de visée dudit dispositif (2), obtenue via le procédé selon l'une des revendications 1 à 4, des vibrations subies par le dispositif (2) à une fréquence (f_{µ}) inférieure à la deuxième fréquence (f_{stabilité}).

6. Procédé de traitement d'images, utilisant le procédé de mesure de l'une des revendications 1 à 5 dans lequel le dispositif (2) est un dispositif d'imagerie, **caractérisé en ce qu'**il comprend les étapes consistant à :
- fournir (E60) des images prises par le dispositif d'imagerie, lesdites images comprenant un bruit lié au déplacement angulaire (Δθ, v_{θ}) de la ligne (1) de visée dudit dispositif d'imagerie,
- traiter (E61) lesdites images à partir de l'information (Δθ, v_{θ}) relative au déplacement angulaire de la ligne (1) de visée, pour réduire ledit bruit.

7. Procédé de contrôle d'attitude d'un satellite (3), comprenant l'étape (E70) consistant à contrôler ladite attitude du satellite (3) à partir de l'information (Δθ, v_{θ}) relative au déplacement angulaire de la ligne (1) de visée du dispositif (2), déduite du procédé selon l'une des revendications 1 à 4.

8. Senseur (4) stellaire, apte être monté sur un satellite (3), comprenant au moins
une première tête (5) adaptée pour la prise d'image d'étoiles (10) à une première fréquence (f_{attitude}),
une deuxième tête (6) adaptée pour la prise d'image d'étoiles (14), **caracterisé en ce que** la deuxième tête est adaptée pour la prise d'image d'étoiles à une deuxième fréquence (f_{stabilité}) supérieure à la première fréquence (f_{attitude}), et **en ce que**
une unité de traitement (20) est apte à
déduire des images prises par la première tête (5) une direction (7) d'une ligne (1) de visée d'un dispositif (2) dudit satellite (3), par comparaison avec un catalogue (11) d'étoiles, et
déduire des images (lⱼ) prises par la deuxième tête (E2) une information (Δθ, v_{θ}) relative au déplacement angulaire de la ligne (1) de visée, à partir du déplacement relatif d'au moins une étoile (12) dans lesdites images (lⱼ).

9. Senseur (4) stellaire selon la revendication 8, dans lequel la deuxième fréquence (f_{stabilité}) est supérieure à 30Hz.

10. Satellite (3) comprenant
un senseur (4) stellaire selon l'une des revendications 8 ou 9, et
un dispositif (2),
l'unité de traitement (20) du senseur stellaire étant apte à
déduire des images prises par la première tête (5) une direction d'une ligne de visée dudit dispositif (2), et
déduire des images (lⱼ) prises par la deuxième tête (E2) une information (Δθ, v_{θ}) relative au déplacement angulaire de la ligne (1) de visée, à partir du déplacement relatif d'au moins une étoile (12) dans lesdites images (lⱼ).

11. Satellite (3) selon la revendication 10, dans lequel la deuxième tête du senseur stellaire est positionnée à une distance (d) du dispositif (2), calculée pour qu'aucun mode de vibration mécanique subi par le dispositif (2) n'apparaisse dans ladite deuxième tête (6) à une fréquence inférieure à la deuxième fréquence (f_{stabilité}).

12. Satellite (3) selon l'une des revendications 10 ou 11, dans lequel le senseur (4) stellaire présente une pluralité de deuxièmes têtes (6)
adaptées pour la prise d'image d'étoiles à une fréquence supérieure à la première fréquence, et
orientées selon des directions de prise d'image différentes.

13. Satellite (3) selon l'une des revendications 10 à 12, dans lequel le dispositif (2) est
un dispositif d'imagerie, ou
un dispositif de détection, de type radar ou télédétection laser.

## Patentansprüche

1. Verfahren zum Messen der Stabilität einer Sichtlinie (1) einer Vorrichtung (2) in einem Satelliten (3), der zumindest einen Sternsensor (4) aufweist, wobei der Sternsensor (4) zumindest enthält:
- einen ersten Kopf (5), der zur Bildaufnahme von Sternen (10) mit einer ersten Frequenz (f_{attitude}) und zum Messen einer Richtung (7) der Sichtlinie (1) durch Vergleich mit einem Sternkatalog (11) ausgelegt ist, und
- einen zweiten Kopf (6), der zur Bildaufnahme von Sternen (14) ausgelegt ist, **dadurch gekennzeichnet, dass** der zweite Kopf zur Bildaufnahme von Sternen mit einer zweiten Frequenz (f_{stabilité}) ausgelegt ist, die höher als die erste Frequenz (f_{attitude}) ist, und dass das Verfahren die nachfolgenden Schritte umfasst:
- aufeinanderfolgendes Aufnehmen (E1) einer Mehrzahl von Sternabbildungen (lⱼ) ausgehend von dem zweiten Kopf (6) mit der zweiten Frequenz (f_{stabilité}) und
- Ableiten (E2) einer Information (Δθ, v₀) bezüglich der Winkelverschiebung der Sichtlinie (1) ausgehend von der relativen Verschiebung zumindest eines Sterns (12) aus der Mehrzahl von Abbildungen (lⱼ).

2. Verfahren nach Anspruch 1, wobei die zweite Frequenz (f_{stabilité}) höher als 30 Hz ist.

3. Verfahren nach einem der Ansprüche 1 oder 2, wobei die Information eine Winkelverschiebung (Δθ) und/oder eine Winkelgeschwindigkeit (v_{θ}) der Sichtline (1) ist.

4. Verfahren nach einem der Ansprüche 1 bis 3, wobei der Schritt (E2), der darin besteht, eine Information (Δθ, v_{θ}) bezüglich der Winkelverschiebung der Sichtlinie (1) abzuleiten, umfasst:
- einen vorhergehenden Schritt (E21) des Auswählens von zumindest einem relevanten Stern ausgehend von zumindest einer Bildaufnahme des ersten Kopfes (5), und
- einen Schritt (E2) des Ableitens der Information (Δθ, v_{θ}) ausgehend von der relativen Verschiebung des relevanten Sterns.

5. Verfahren zum Messen von mechanischen Vibrationen einer Vorrichtung (2) in einem Satelliten (3), **dadurch gekennzeichnet, dass** es den Schritt (E50) umfasst, der darin besteht, aus der Information (Δθ, v_{θ}) bezüglich der Winkelverschiebung der Sichtlinie (1) der Vorrichtung (2), die mit dem Verfahren nach einem der Ansprüche 1 bis 4 erhalten wurde, Vibrationen abzuleiten, welchen die Vorrichtung (2) mit einer Frequenz (f_{µ}) ausgesetzt ist, die geringer als die zweite Frequenz (f_{stabilité}) ist.

6. Verfahren zum Verarbeiten von Bildern, bei dem das Verfahren zum Messen nach einem der Ansprüche 1 bis 5 verwendet wird, wobei die Vorrichtung (2) eine Abbildungsvorrichtung ist, **dadurch gekennzeichnet, dass** es die nachfolgenden Schritte umfasst:
- Bereitstellen (E60) von Abbildungen, die von der Abbildungsvorrichtung aufgenommen wurden, wobei die Abbildungen ein mit der Winkelverschiebung (Δθ, v_{θ}) der Sichtlinie (1) der Abbildungsvorrichtung zusammenhängendes Rauschen aufweisen,
- Verarbeiten (E61) der Bilder ausgehend von der Information (Δθ, v_{θ}) bezüglich der Winkelverschiebung der Sichtlinie (1), um das Rauschen zu vermindern.

7. Verfahren zur Lagesteuerung eines Satelliten (3), umfassend den Schritt (E70), der darin besteht, die Lage des Stelliten (3) ausgehend von der Information (Δθ, v_{θ}) bezüglich der Winkelverschiebung der Sichtlinie (1) der Vorrichtung (2) zu steuern, die mit dem Verfahren nach einem der Ansprüche 1 bis 4 abgeleitet wurde.

8. Sternsensor (4), der dazu geeignet ist, an einen Stelliten (3) montiert zu werden, enthaltend zumindest
- einen ersten Kopf (5), der zur Bildaufnahme von Sternen (10) mit einer ersten Frequenz (f_{attitude}) ausgelegt ist,
- einen zweiten Kopf (6), der zur Bildaufnahme von Sternen (14) ausgelegt ist,
**dadurch gekennzeichnet, dass** der zweite Kopf zur Bildaufnahme von Sternen mit einer zweiten Frequenz (f_{stabilité}) ausgelegt ist, die höher als die erste Frequenz (f_{attitude}) ist, und dass
- eine Verarbeitungseinheit (20) dazu geeignet ist,
aus den von dem ersten Kopf (5) aufgenommenen Abbildungen eine Richtung (7) einer Sichtlinie (1) einer Vorrichtung (2) des Satelliten (3) durch Vergleich mit einem Sternkatalog (11) abzuleiten und
aus den von dem zweiten Kopf (E2) aufgenommenen Abbildungen (lⱼ) eine Information (Δ̂θ, v₀) bezüglich der Winkelverschiebung der Sichtlinie (1) ausgehend von der relativen Verschiebung zumindest eines Sterns (12) in den Abbildungen (lⱼ) abzuleiten.

9. Sternsensor (4) nach Anspruch 8, wobei die zweite Frequenz (f_{stabilité}) höher als 30 Hz ist.

10. Satellit (3), enthaltend
einen Sternsensor (4) nach einem der Ansprüche 8 oder 9 und
eine Vorrichtung (2),
wobei die Verarbeitungseinheit (20) des Sternsensors dazu geeignet ist,
aus den von dem ersten Kopf (5) aufgenommenen Abbildungen eine Richtung (7) einer Sichtlinie (1) der Vorrichtung (2) abzuleiten und
aus den von dem zweiten Kopf (E2) aufgenommenen Abbildungen (lⱼ) eine Information (Δθ, v₀) bezüglich der Winkelverschiebung der Sichtlinie (1) ausgehend von der relativen Verschiebung zumindest eines Sterns (12) in den Abbildungen (lⱼ) abzuleiten.

11. Satellit (3) nach Anspruch 10, wobei der zweite Kopf des Sternsensors in einem Abstand (d) von der Vorrichtung (2) positioniert ist, der so berechnet ist, dass keine Form von mechanischer Vibration, welcher die Vorrichtung (2) ausgesetzt ist, in dem zweiten Kopf (6) mit einer Frequenz auftritt, die geringer als die zweite Frequenz (f_{stabilité}) ist.

12. Satellit (3) nach einem der Ansprüche 10 oder 11, wobei der Sternsensor (4) eine Mehrzahl von zweiten Köpfen (6) aufweist,
die für die Bildaufnahme von Sternen mit einer Frequenz, die höher als die erste Frequenz ist, ausgelegt sind und
in verschiedenen Bildaufnahmerichtungen ausgerichtet sind.

13. Satellit (3) nach einem der Ansprüche 10 bis 12, wobei die Vorrichtung (2)
eine Abbildungsvorrichtung oder
eine Erfassungsvorrichtung vom Typ Radar oder Laser-Fernerfassung ist.

## Claims

1. Method for measuring the stability of a line (1) of sight of a device (2) in a satellite (3) comprising at least one star sensor (4), said star sensor (4) comprising at least
a first head (5) suitable for imaging stars (10) at a first frequency (f_{attitude}), for measuring a direction (7) of the line (1) of sight by comparison with a star catalogue (11), and
a second head (6) suitable for imaging stars (14), **characterised in that** said second head is suitable for imaging stars at a second frequency (f_{stabilité}) greater than the first frequency (f_{attitude}), and **in that** said method comprises steps consisting of:
- successively capturing (E1) a plurality of images (Iⱼ) of stars using the second (6) head at said second frequency (f_{stability}), and
- deducing (E2) an information (Δθ, v_{θ}) relative to the angular displacement of the line (1) of sight based on the relative displacement of at least one star (12) in said plurality of images (Iⱼ).

2. Method according to claim 1, wherein the second frequency (f_{stability}) is greater than 30 Hz.

3. Method according to any of claims 1 or 2, wherein said information is an angular displacement (Δθ) and/or an angular velocity (v_{θ}) of the line (1) of sight.

4. Method according to any of claims 1 to 3, wherein the step (E2) consisting of deducing an item of information (Δθ, v_{θ}) relative to the angular displacement of the line (1) of sight comprises
a prior step (E21) of selecting at least one star of interest from at least one image capture of the first head (5), and
a step (E2) of deducing said information (Δθ, v_{θ}) based on the relative displacement of said star of interest.

5. Method for measuring mechanical vibrations of a device (2) in a satellite (3), **characterised in that** it comprises the step (E50) consisting of deducing from the information (Δθ, v_{θ}) relative to the angular displacement of said line (1) of said device (2), obtained by means of the method according to any of claims 1 to 4, the vibrations experienced by the device (2) at a frequency (f_{µ}) less than the second frequency (f_{stability}).

6. Method for processing images, using the measuring method according to any of claims 1 to 5 wherein the device (2) is an imaging device, **characterised in that** it comprises steps consisting of:
- supplying (E60) images captured by the imaging device, said images comprising a noise associated with the angular displacement (Δθ, v_{θ}) of the line (1) of sight of said imaging device,
- processing (E61) said images based on the information (Δθ, v_{θ}) relative to the angular displacement of the line (1) of sight, to reduce said noise.

7. Method for monitoring the attitude of a satellite (3), comprising the step (E70) consisting of monitoring said attitude of the satellite (3) based on the information (Δθ, v_{θ}) relative to the angular displacement of the line (1) of sight of the device (2), deduced from the method according to any of claims 1 to 4.

8. Star sensor (4), suitable for being fitted on a satellite (3), comprising at least
a first head (5) suitable for imaging stars (10) at a first frequency (f_{attitude}),
a second head (6) suitable for imaging stars (14), **characterised in that** said second head is suitable for imaging stars at a second frequency (f_{stability}) greater than the first frequency (f_{attitude}), and **in that**
a processing unit (20) is suitable for
deducing from the images captured by the first head (5) a direction (7) of a line (1) of sight of a device (2) of said satellite (3), by comparison with a star catalogue (11), and
deducing from the images (Ij) captured by the second head (E2) an information (Δθ, v_{θ}) relative to the angular displacement of the line (1) of sight, based on the relative displacement of at least one star (12) in said images (Iⱼ).

9. Star sensor (4) according to claim 8, wherein the second frequency (f_{stability}) is greater than 30 Hz.

10. Satellite (3) comprising
a star sensor (4) according to any of claims 8 or 9, and
a device (2),
the processing unit (20) of the star sensor being suitable for
deducing from the images captured by the first head (5) a direction (7) of a line (1) of sight of said device (2), and
deducing from the images (Ij) captured by the second head (E2) an information (Δθ, v_{θ}) relative to the angular displacement of the line (1) of sight, based on the relative displacement of at least one star (12) in said images (Iⱼ).

11. Satellite (3) according to claim 10, wherein the second head of the star sensor is positioned at a distance (d) from the device (2), calculated so that no mode of mechanical vibration experienced by the device (2) appears in said second head (6) at a frequency less than the second frequency (f_{stability}) .

12. Satellite (3) according to any of claims 10 or 11, wherein the star sensor (4) has a plurality of second heads (6)
suitable for imaging stars at a frequency greater than the first frequency, and
oriented along different imaging directions.

13. Satellite (3) according to any of claims 10 to 12, wherein the device (2) is
an imaging device, or
a radar or laser remote detection type detection device.
